# DEMANDE DE BREVET EUROPEEN

(11) **EP 4 223 405 A1**
(43) Date de publication de la demande: **09.08.2023**
(21) Numéro de dépôt: 23153412.4
(22) Date de dépôt: 26.01.2023
(51) Int. Cl.: B01J 8/00, B01J 15/00, B01J 19/32, B01J 4/00, B66C 1/10, B66C 1/42, B01D 47/14

(54) **DISPOSITIF D'INSERTION D'UN TRONÇON DE GARNISSAGE**

(30) Priorité: 08.02.2022 FR 2201091
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BABINET, Cyrille, 94400 VITRY SUR SEINE (FR); GALLOPIN, Eric, 78350 JOUY EN JOSAS (FR); LEBAIN, Gilles, 94400 VITRY SUR SEINE (FR)
(74) Mandataire: Air Liquide

(57) **Abrégé**

La présente invention concerne un dispositif d'insertion (5) d'au moins un tronçon de garnissage (2) pour une colonne de séparation gaz/liquide au sein d'une virole (3) cylindrique, comprenant une base (8) pourvue de moyens d'accroche (6) configurés pour agripper un tronçon de garnissage (2) et disposés régulièrement autour d'un axe principal (11), caractérisé en ce que le dispositif d'insertion (5) comprend au moins deux moyens de fixation (39) solidaires de la base (8), lesdits moyens de fixation (39) étant configurés pour fixer le dispositif d'insertion (5) à la virole (3).

L'invention couvre également un système d'insertion (1) d'au moins un tronçon de garnissage (2) au sein d'une virole (3) cylindrique comprenant un tel dispositif d'insertion (5), ainsi qu'un procédé d'insertion d'au moins un tronçon de garnissage (2) au sein d'une virole (3) cylindrique mis en oeuvre par un tel système d'insertion (1).

## Description

La présente invention se rapporte au domaine des colonnes de séparation gaz/liquide et à leur assemblage et elle concerne plus particulièrement un dispositif d'insertion de tronçons de garnissage dans une virole afin de former ces dites colonnes de séparation gaz/liquide.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation gaz/liquide comprend notamment une étape d'insertion d'une pluralité de tronçons de garnissage pour une colonne de séparation gaz/liquide au sein d'une virole. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

JP H01 242102 décrit un dispositif d'insertion d'au moins un tronçon de garnissage au sein d'une virole cylindrique comprenant une base pourvue de moyens d'accroche configurés pour agripper un tronçon de garnissages et disposés régulièrement autour d'un axe principal.

Il est connu de procéder à l'insertion des tronçons de garnissage au sein d'une virole maintenue verticale, la force de gravité facilitant grandement la progression du tronçon de garnissage inséré au sein de la virole. Un tel procédé peut toutefois s'avérer contraignant lorsque les colonnes de séparation gaz/liquide à assembler présentent un diamètre important et une dimension axiale nécessitant la mise en oeuvre de viroles de grande longueur, de l'ordre de plusieurs dizaines de mètres. En effet, de tels procédés avec une insertion verticale des tronçons de garnissage nécessitent alors un outillage apte à soulever les tronçons de garnissage sur une grande distance afin de les mettre en regard de l'extrémité de la virole ainsi qu'un site de production présentant une hauteur de plafond supérieure à la longueur de la virole.

Il est donc souhaité, pour les viroles de longueur élevée, de prévoir un procédé d'assemblage dans lequel l'insertion des tronçons de garnissage est effectuée avec la virole agencée à l'horizontale. Une telle position génère plusieurs contraintes, notamment celle de devoir agencer un contrepoids au contact de l'extrémité de la virole opposée à celle où sont insérés les tronçons de garnissage afin de retenir la virole lors de l'insertion. L'insertion des tronçons de garnissage nécessitant des forces de poussée très intenses, le contrepoids utilisé doit être suffisamment imposant pour résister à de telles forces de poussée.

La présente invention permet de se passer d'un tel contrepoids en proposant un dispositif d'insertion d'au moins un tronçon de garnissage au sein d'une virole cylindrique, comprenant une base pourvue de moyens d'accroche configurés pour agripper un tronçon de garnissage et disposés régulièrement autour d'un axe principal, caractérisé en ce que le dispositif d'insertion comprend au moins deux moyens de fixation solidaires de la base, lesdits moyens de fixation étant configurés pour fixer le dispositif d'insertion à la virole.

Grâce aux moyens de fixation, le dispositif d'insertion est maintenu contre la virole, y compris lors de l'insertion des tronçons de garnissage. L'insertion des tronçons de garnissage peut par exemple être effectuée par des dispositifs télescopiques se déployant afin d'opérer une poussée du tronçon de garnissage. De tels dispositifs peuvent présenter une force de poussée importante au point d'entraîner un déplacement non souhaité de la virole. Les moyens de fixation pallient cette éventualité en retenant la virole et en opérant ainsi une force opposée à la force des dispositifs assurant l'insertion des tronçons de garnissage dans la virole.

Le dispositif d'insertion permet le remplissage d'une virole par une pluralité de tronçons de garnissage pour une colonne de séparation gaz/liquide afin de former une colonne de séparation gaz/liquide. La base du dispositif d'insertion, plus particulièrement les moyens d'accroche de celle-ci, sont aptes à agripper un tronçon de garnissage par les côtés de celui-ci. Les tronçons de garnissage présentant une forme circulaire pouvant aller jusqu'à 5m de diamètre, la base doit donc être dimensionnée de sorte à ce que les moyens d'accroche puissent agripper un tel tronçon de garnissage par les côtés. L'axe principal autour duquel sont disposés les moyens d'accroche peut par exemple passer par le centre du tronçon de garnissage et/ou être parallèle ou confondu avec l'axe de révolution de la virole. Une fois le tronçon de garnissage agrippé, ce dernier est positionné au niveau de l'entrée de la virole, et le maintien du dispositif d'insertion contre la virole, par l'intermédiaire des moyens de fixation, peut être mis en oeuvre. Ceci étant fait, le tronçon de garnissage peut être inséré au sein de la virole, et ce sans disposer un encombrant contrepoids contre l'extrémité opposée de la virole pour compenser les forces de poussée lors de l'insertion.

Selon une caractéristique de l'invention, les moyens de fixation sont agencés de manière régulière autour de l'axe principal. La répartition régulière des moyens de fixation évite une inégalité des compensations des forces de poussée exercées sur le tronçon de garnissage lors de l'insertion de celui-ci au sein de la virole. Une répartition irrégulière des moyens de fixation, ou la présence d'un unique moyen de fixation risque de créer un recul non homogène de la virole lors de l'insertion du tronçon de garnissage, particulièrement au niveau d'une ou plusieurs zones éloignées du ou des moyens de fixation, et donc de créer un désaxage entre la virole et les tronçons de garnissage qui doivent être insérés à l'intérieur de la virole.

Selon une caractéristique de l'invention, au moins un moyen de fixation et un moyen d'accroche sont agencés sur un même montant périphérique de la base. La base peut ainsi comprendre une pluralité de montants périphériques, tous agencés et répartis régulièrement autour de l'axe principal. Un montant périphérique peut ainsi être porteur d'un moyen d'accroche seul, d'un moyen de fixation seul, ou bien des deux à la fois, l'essentiel étant que le moyen d'accroche et le moyen de fixation ne créent pas d'interférence mécanique l'un envers l'autre pouvant nuire au bon déroulement de la fonction de l'un et/ou de l'autre.

Selon une caractéristique de l'invention, les moyens de fixation comprennent chacun un vérin rétractable, un crochet, et un ensemble d'entraînement reliant mécaniquement le vérin rétractable au crochet. Le crochet correspond à la partie du moyen de fixation venant se refermer sur la virole afin de maintenir le dispositif d'insertion en regard de celle-ci. Le vérin rétractable permet de contrôler une position du crochet via le dispositif d'entraînement. A ce titre, le vérin rétractable peut par exemple être un vérin hydraulique ou pneumatique.

Selon une caractéristique de l'invention, l'ensemble d'entraînement comprend au moins une bielle et une manivelle configurées pour entraîner un pivotement du crochet en fonction d'un mouvement linéaire du vérin rétractable. Le vérin rétractable génère le mouvement linéaire en se déployant ou en se rétractant. Ce mouvement entraîne l'ensemble d'entraînement. La bielle étant mise en mouvement, celle-ci entraîne alors la manivelle qui à son tour entraîne le mouvement du crochet. C'est grâce à la bielle et à la manivelle que le mouvement linéaire du vérin rétractable est converti en un mouvement de pivotement du crochet.

Selon une caractéristique de l'invention, les crochets sont aptes à pivoter entre une position escamotée et une position déployée. Ces deux positions sont dépendantes de la position du vérin rétractable. A titre d'exemple, lorsque ce dernier est entièrement déployé, le crochet est en position escamotée et lorsque le vérin rétractable est entièrement rétracté, le crochet est en position déployée. Le vérin rétractable peut par exemple être actionné à distance afin de déployer ou d'escamoter le crochet en fonction du besoin. Un crochet en position déployée est en position pour se fixer à la virole et maintenir le dispositif d'insertion en regard de celle-ci. La position déployée est donc mise en oeuvre lors du positionnement du dispositif d'insertion en regard de la virole, une fois un tronçon de garnissage en regard de la virole et prêt à être inséré, et est maintenue lors de l'insertion du tronçon de garnissage au sein de la virole. Selon une caractéristique de l'invention, les crochets en position escamotée sont en retrait des moyens d'accroches par rapport à l'axe principal. La position escamotée est mise en oeuvre pour éviter de potentielles interférences mécaniques entre les crochets en position déployée et tout autre élément du dispositif d'insertion. Cette position escamotée est notamment utile lorsque le dispositif d'insertion est mis en oeuvre pour agripper un tronçon de garnissage à l'aide des moyens d'accroche. Les crochets sont alors pivotés pour être en retrait desdits moyens d'accroche par rapport à l'axe principal, avec les crochets escamotés à distance de l'extrémité libre des montants périphériques, afin que les crochets ne butent pas contre un tronçon de garnissage ou contre un support où sont disposés les tronçons de garnissage.

Selon une caractéristique de l'invention, le pivotement des crochets se fait au niveau d'une face du montant périphérique opposée aux moyens d'accroche. Une telle configuration permet aux crochets de ne pas buter contre les moyens d'accroche lors de leur pivotement.

Selon une caractéristique de l'invention, chaque crochet comprend une terminaison configurée pour être en contact direct avec une collerette de la virole. La terminaison vient ainsi former une butée axiale contre la virole, c'est-à-dire parallèle à l'axe principal, afin de maintenir correctement le dispositif d'insertion contre la virole. Afin que la prise des crochets soit optimale, la virole peut comprendre une collerette s'étendant circonférentiellement autour de la virole et contre laquelle la terminaison de chaque crochet vient buter lorsque les crochets sont en position déployée.

L'invention couvre également un système d'insertion d'au moins un tronçon de garnissage au sein d'une virole cylindrique, comprenant une structure porteuse et un dispositif d'insertion tel que décrit précédemment, le dispositif d'insertion étant porté par la structure porteuse de sorte à ce que les moyens de fixation soient aptes à fixer le dispositif d'insertion à la virole.

La structure porteuse se présente sous la forme d'un portique apte à se déplacer selon au moins une direction tout en portant le dispositif d'insertion agrippant un tronçon de garnissage. Pour opérer un tel déplacement, la structure porteuse peut par exemple être agencé sur des rails afin que le déplacement se fasse selon la direction la plus précise possible.

Tel que cela a été évoqué, l'objectif du système d'insertion selon l'invention est d'insérer des tronçons de garnissage pour une colonne de séparation gaz/liquide au sein d'une virole agencée horizontalement, et ce sans besoin d'agencer un contrepoids à l'opposé de l'entrée de la virole. Les moyens de fixation sont donc configurés pour maintenir ledit système d'insertion contre la virole malgré les forces de poussée exercées sur le tronçon de garnissage lors de l'opération d'insertion de celui-ci.

Selon une caractéristique de l'invention, le dispositif d'insertion est apte à effectuer dans son ensemble un mouvement de translation de manière relative à la structure porteuse. Indépendamment de la structure porteuse, le dispositif d'insertion peut se déplacer par exemple de manière verticale. Ce déplacement vertical est utile par exemple pour positionner le dispositif d'insertion à l'aplomb d'une pile de tronçons de garnissage, puis pour le descendre dans le but d'agripper le tronçon de garnissage disposé au sommet de la pile. Le déplacement vertical du dispositif d'insertion par rapport à la structure porteuse est également utile dans le but d'ajuster la position du tronçon de garnissage agrippé afin de positionner correctement celui-ci à l'entrée de la virole et ainsi de favoriser la poussée du tronçon de garnissage au sein de la virole. Le déplacement relatif du dispositif d'insertion par rapport à la structure porteuse peut par exemple se faire à l'aide d'un moteur embarqué sur la structure porteuse et configuré pour déplacer un élément porteur du dispositif d'insertion le long de la structure porteuse.

Selon une caractéristique de l'invention, le dispositif d'insertion est apte à effectuer dans son ensemble une rotation de manière relative à la structure porteuse. La rotation permet notamment de basculer le dispositif d'insertion, avec une structure porteuse qui reste fixe, entre une position où le dispositif d'insertion est agencé de manière verticale dans le but d'agripper un tronçon de garnissage sur une pile verticale de tronçons de garnissage, et une position où le dispositif d'insertion est agencé de manière horizontale dans le but de procéder à l'insertion du tronçon de garnissage agrippé au sein de la virole. Les éléments de rotation doivent donc être configurés pour permettre une rotation du dispositif d'insertion d'environ 90°, afin que le dispositif d'insertion puisse basculer entre les positions verticales et horizontales évoquées précédemment. La rotation relative du dispositif d'insertion par rapport à la structure porteuse peut par exemple se faire à l'aide d'un moteur apte à piloter un système à engrenages entraînant la rotation du dispositif d'insertion, ou bien encore via un système à chaîne ou un système hydraulique.

L'invention couvre également un procédé d'insertion d'au moins un tronçon de garnissage pour une colonne de séparation gaz/liquide au sein d'une virole cylindrique mis en oeuvre par un système d'insertion tel que décrit précédemment, comprenant :
- une étape d'agrippement d'un tronçon de garnissage par les moyens d'accroche du dispositif d'insertion,
- une étape de rotation dans son ensemble du dispositif d'insertion par rapport à la structure porteuse,
- une étape de déplacement du système d'insertion jusqu'à la virole grâce à la structure porteuse,
- une étape de positionnement du tronçon de garnissage au niveau d'une entrée de la virole,
- une étape de fixation du dispositif d'insertion à la virole à l'aide des moyens de fixation,
- une étape de poussée du tronçon de garnissage au sein de la virole.

Les étapes du procédé se font à l'aide des différents éléments évoqués précédemment du système d'insertion. Ainsi, l'étape d'agrippement se fait à l'aide des moyens d'accroche du dispositif d'insertion et des moyens de mise en translation du dispositif d'insertion par rapport à la structure porteuse, l'étape de rotation à l'aide des éléments de rotation embarqués sur la structure porteuse, l'étape de déplacement via la structure porteuse, l'étape de positionnement à l'aide des moyens de mise en translation du dispositif d'insertion par rapport à la structure porteuse, l'étape de fixation grâce aux moyens de fixation et l'étape de poussée à l'aide des dispositifs télescopiques. Il convient de noter qu'il s'agit ici d'une liste d'étapes non exhaustive pour le bon déroulement du procédé d'insertion de tronçons de garnissage au sein de la virole selon l'invention. A titre d'exemple non limitatif, on pourra prévoir dans le procédé selon l'invention une étape de contrôle du bon positionnement du tronçon de garnissage une fois inséré dans la virole. Cette étape additionnelle, venant ici à la suite de l'étape de poussée, consiste alors en une vérification et un enregistrement de la bonne position du tronçon de garnissage qui vient d'être inséré, à l'aide d'un appareil de mesure précis au millimètre.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] représente une vue de côté d'un dispositif d'insertion selon l'invention et d'une pile de tronçons de garnissage pour une colonne de séparation gaz/liquide aptes à être saisi par le dispositif d'insertion,
[Fig. 2] est une vue générale d'un système d'insertion d'un tronçon de garnissage pour une colonne de séparation gaz/liquide dans une virole selon l'invention,
[Fig. 3] est une vue détaillée d'un moyen de fixation du dispositif d'insertion,
[Fig. 4] est une vue détaillée du moyen de fixation accroché à la virole,
[Fig. 5] représente une étape d'agrippement du tronçon de garnissage pour une colonne de séparation gaz/liquide d'un procédé d'insertion de tronçons de garnissage,
[Fig. 6] représente une étape de rotation du dispositif d'insertion et de déplacement du système d'insertion du procédé d'insertion de tronçons de garnissage pour une colonne de séparation gaz/liquide,
[Fig. 7] représente une étape d'insertion du tronçon de garnissage du procédé d'insertion de tronçons de garnissage pour une colonne de séparation gaz/liquide.

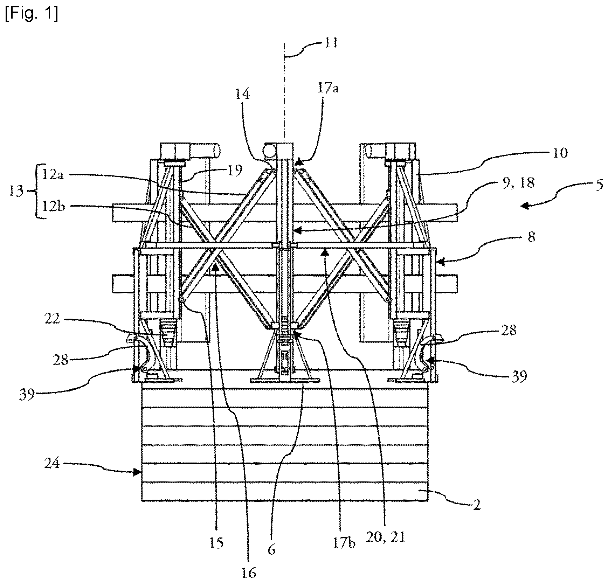

La figure 1 représente un dispositif d'insertion 5 comportant des moyens de fixation conformes à un aspect de l'invention et agrippant ici un tronçon de garnissage 2 pour une colonne de séparation gaz/liquide au sommet d'une pile 24 de tronçons de garnissage 2. Le dispositif d'insertion 5 fait partie d'un système d'insertion horizontale de tronçons de garnissage 2 au sein d'une virole dans le but de former une colonne de séparation gaz/liquide. Un tel système d'insertion sera décrit en détails par la suite. Le dispositif d'insertion 5 participe à la mise en oeuvre d'un procédé d'insertion desdits tronçons de garnissage pour une colonne de séparation gaz/liquide au sein de la virole. Le dispositif d'insertion 5 comprend une base 8 pourvue de moyens d'accroche 6 permettant au dispositif d'insertion 5 d'agripper un tronçon de garnissage 2, et ce peu importe le diamètre dudit tronçon de garnissage 2. Sur la figure 1, les moyens d'accroche 6 sont au nombre de six.

La base 8 comprend un montant principal 9 et une pluralité de montants périphériques 10 parallèles au montant principal 9. Le montant principal 9 s'étend principalement selon un axe principal 11 passant par le centre ou sensiblement par le centre du tronçon de garnissage 2 agrippé. Les montants périphériques 10 sont agencés de manière circonférentielle et régulière autour du montant principal 9. C'est au niveau des montants périphériques 10 que sont agencés les moyens d'accroche 6 évoqués précédemment. La base 8 comprend au moins deux montants périphériques 10. D'une manière avantageuse, la base 8 comprend au moins six montants périphériques 10. Une telle base 8 permet d'agripper un tronçon de garnissage 2 d'un diamètre défini. D'une manière alternative, la base 8 peut être apte à se déployer pour couvrir une pluralité de diamètres de tronçon de garnissage 2. Pour ce faire, chaque montant périphérique 10 peut être mécaniquement relié au montant principal 9 par deux branches 12 formant un duo de branches 13. Chacune des deux branches 12 comprend une première extrémité 14 liée au montant principal 9, et une deuxième extrémité 15 liée au montant périphérique 10. De plus, les deux branches 12 du duo de branches 13 sont sécantes entre elles et sont liées entre elles au niveau de leur point d'intersection, c'est-à-dire sensiblement en leur centre, par une liaison pivot 16. Le montant principal 9 comprend deux bagues fixes 17, chacune des bagues fixes 17 étant agencée au niveau de chaque portion terminale dudit montant principal 9. Le montant principal 9 comprend un corps télescopique 18 apte à modifier une dimension principale du montant principal 9. Ainsi, en modifiant la longueur du montant principal 9, il est possible d'augmenter ou de réduire la distance entre les deux bagues fixes 17. La longueur du montant principal 9 peut être réglée de manière manuelle ou via un organe de contrôle non représenté. Le corps télescopique 18 permet de modifier la longueur du montant principal 9 en déployant ou rétractant au moins l'une des portions terminales de celui-ci.

La première extrémité 14 de chaque branche 12 du duo de branches 13 reliant le montant principal 9 à l'un des montants périphériques 10 est plus particulièrement liée à l'une des bagues fixes 17 agencées sur le montant principal 9. Chaque duo de branches 13 comprend ainsi une première branche 12a dont la première extrémité 14 est liée à une première bague fixe 17a, et une deuxième branche 12b dont la première extrémité 14 est liée à une deuxième bague fixe 17b. La deuxième extrémité 15 des deux branches 12 est quant à elle fixée sur le montant périphérique 10 et au moins l'une d'entre elles peut coulisser le long de celui-ci, par exemple à l'aide d'une glissière 19 formée au niveau de l'une des faces du montant périphérique 10.

Ainsi, lorsque la longueur du montant principal 9 est modifiée grâce au corps télescopique 18, la distance entre les bagues fixes 17 et donc la distance entre les premières extrémités 14 de chacune des deux branches 12 sont également modifiées. Les branches 12 étant reliées en un point formant liaison pivot 16, ce point tend à se rapprocher ou s'éloigner du montant principal 9 en fonction de l'écartement ou du rapprochement l'une de l'autre des premières extrémités 14. Le mouvement du corps télescopique 18 entraîne de la sorte une modification de l'inclinaison des branches 12 de chacun des duos de branches 13 et modifie ainsi une distance radiale entre le montant principal 9 et les montants périphériques 10.

Les moyens d'accroche 6 peuvent ainsi être écartés pour pouvoir être en prise autour de tronçons de garnissage 2 de différents diamètres. Plus la longueur du montant principal 9 est élevée, plus les bagues fixes 17 sont éloignées l'une par rapport à l'autre, et plus les montants périphériques 10 sont proches du montant principal 9, adaptant le dispositif d'insertion 5 à un petit diamètre de tronçon de garnissage 2. A l'inverse, plus la longueur du montant principal 9 est faible, plus les bagues fixes 17 sont rapprochées l'une par rapport à l'autre, et plus les montants périphériques 10 sont éloignés du montant principal 9, adaptant le dispositif d'insertion 5 à un grand diamètre de tronçon de garnissage 2. La base 8 telle qu'elle vient d'être évoquée permet donc d'adapter le dispositif d'insertion 5 à une pluralité de diamètres de tronçons de garnissage 2 et de viroles.

Une fois la distance radiale souhaitée établie, celle-ci peut être figée par un moyen de verrouillage 20. Le moyen de verrouillage 20 peut par exemple être associé à une pluralité de barres déployables 21 s'étendant entre deux montants périphériques 10 adjacents, tel que cela est illustré sur la figure 1.

Avec une base 8 apte à se déployer tel que décrit précédemment, les moyens d'accroche 6 peuvent être réglés pour correctement saisir le tronçon de garnissage 2, et ce peu importe le diamètre de celui-ci.

Du fait de la prise du tronçon de garnissage 2 par la tranche, associé au fait que les tronçons de garnissage 2 présentent une forme cylindrique à section circulaire ou sensiblement circulaire, les moyens d'accroche 6 présentent une forme d'arc de cercle, et ce afin que l'ensemble du moyen d'accroche 6 destiné à être au contact du tronçon de garnissage 2 épouse un rayon de courbure de celui-ci. L'agrippement du tronçon de garnissage 2 est ainsi facilité et plus stable. Afin que l'agrippement du tronçon de garnissage 2 par les moyens d'accroche 6 soit optimal, la courbure de l'arc de cercle formé par les moyens d'accroche 6 est réglable afin de s'adapter à tous diamètres de tronçons de garnissage 2.

Après agrippement du tronçon de garnissage 2 par les moyens d'accroche 6, ces derniers peuvent être pilotés de manière individuelle l'un par rapport à l'autre dans le but de pousser sur un point précis du tronçon de garnissage 2 et déformer localement ce dernier. Une telle déformation locale peut être préconisée lorsqu'un différentiel de forme existe entre le tronçon de garnissage 2 et la virole au sein de laquelle le tronçon de garnissage 2 est destiné à être inséré. La déformation locale permet ainsi de modifier légèrement la forme du tronçon de garnissage 2 afin que celui-ci puisse par la suite être inséré dans la virole de manière plus aisée.

Au moins deux des montants périphériques 10 sont pourvus de dispositifs télescopiques 22. Les dispositifs télescopiques 22 peuvent être agencés sur un montant périphérique 10 également pourvu d'un moyen d'accroche 6, l'essentiel étant que l'ensemble de ces éléments n'interfèrent pas mécaniquement les uns par rapport aux autres. Les dispositifs télescopiques 22 permettent d'opérer une poussée du tronçon de garnissage 2 une fois celui-ci mis en place en regard de la virole. Cette poussée est effectuée dès lors que les moyens d'accroche 6 ont été commandés pour lâcher le tronçon de garnissage 2. Les dispositifs télescopiques 22 se déploient afin de pousser le tronçon de garnissage 2 jusqu'au bout de la virole, et ce peu importe la longueur de cette dernière. Si un ou plusieurs tronçons de garnissage 2 ont déjà été précédemment insérés dans la virole, les dispositifs télescopiques poussent le tronçon de garnissage 2 jusqu'à ce que ce dernier soit au contact du tronçon de garnissage 2 précédemment inséré. Les dispositifs télescopiques 22 peuvent être intégrés à la base 8 précédemment décrite. Sur la figure 1, le dispositif d'insertion 5 étant en train d'agripper un tronçon de garnissage 2 sur la pile 24, les dispositifs télescopiques 22 sont donc repliés.

Le dispositif d'insertion 5 comprend également une pluralité de moyens de fixation 39. Ces derniers comprennent chacun un crochet 28 destiné à fixer et maintenir le dispositif d'insertion 5 contre la virole lors de l'insertion des tronçons de garnissage 2 au sein de la virole.

Sur la figure 1, le dispositif d'insertion 5 est en cours d'agrippement d'un tronçon de garnissage 2. Les moyens de fixation 39 ne sont donc pas utilisés à ce stade du procédé d'insertion. De ce fait, les crochets 28 présentent une position escamotée afin de ne pas interférer mécaniquement avec l'agrippement des tronçons de garnissage 2 par les moyens d'accroche 6. Les crochets 28 sont donc en retrait des moyens d'accroche 6 par rapport à l'axe principal 11, c'est-à-dire avec les moyens d'accroche qui sont positionnés à distance de l'extrémité libre des montants périphériques 10. Cette position escamotée permet également aux crochets 28 de ne pas faire butée contre le sol lorsque le dispositif d'insertion 5 vient agripper le dernier tronçon de garnissage 2 de la pile 24 de tronçons de garnissage 2.

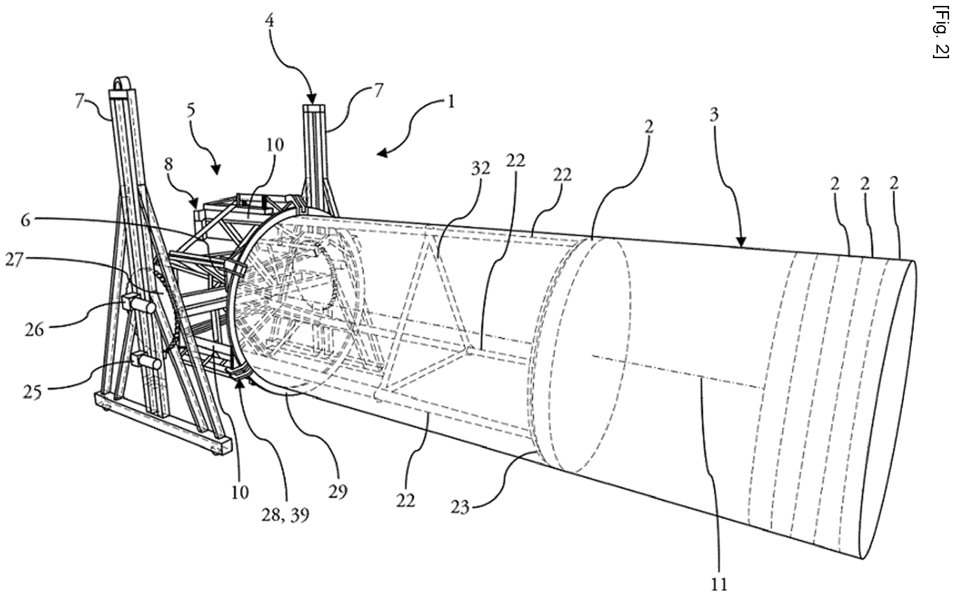

La figure 2 représente le système d'insertion 1 horizontale de tronçons de garnissage 2 tel qu'évoqué précédemment, en cours d'insertion d'un tronçon de garnissage 2 au sein de la virole 3, dans le but de former une colonne de séparation gaz/liquide. De telles colonnes de séparation se présentent par exemple sous une forme cylindrique à section circulaire ou sensiblement circulaire. Les colonnes de séparation peuvent présenter une dimension principale de plusieurs dizaines de mètres et une section cylindrique de plusieurs mètres. Les tronçons de garnissage 2 amenés à être insérés au sein de ces colonnes de séparation peuvent présenter une section circulaire ou sensiblement circulaire d'un diamètre de l'ordre de 2,5m à 5m.

Pour des raisons d'encombrement mécanique en termes de hauteur rendant impossible l'opération d'insertion lorsque la virole 3 est agencée verticalement, ladite opération est ici effectuée avec la virole 3 en position horizontale, l'insertion des tronçons de garnissage 2 se faisant également selon une direction horizontale.

Le système d'insertion 1 de tronçons de garnissage 2 selon l'invention permet d'opérer le procédé d'insertion desdits tronçons de garnissage 2 au sein de la virole 3, bien que celle-ci soit en position horizontale et de ce fait puisse entraîner des contraintes mécaniques.

Après l'agrippement d'un tronçon de garnissage 2 par le dispositif d'insertion 5, tel que cela est illustré sur la figure 1, le système d'insertion 1 permet par la suite d'effectuer une rotation afin d'agencer le tronçon de garnissage 2 en regard d'une entrée de la virole 3, de se déplacer jusqu'à l'entrée de la virole 3, puis de pousser le tronçon de garnissage 2 jusqu'au fond de la virole 3 ou contre un autre tronçon de garnissage 2 déjà inséré au sein de la virole 3, en assurant une avancée la plus fluide possible, c'est-à-dire avec le moins d'à-coups possible, du tronçon de garnissage 2 au sein de la virole 3.

Pour ce faire, le système d'insertion 1 comprend une structure porteuse 4 se présentant sous la forme d'un portique comprenant deux piliers 7 entre lesquels repose le dispositif d'insertion 5. La structure porteuse 4 peut par exemple être montée sur rails afin que le système d'insertion 1 puisse opérer un déplacement linéaire entre la pile de tronçons de garnissage 2 et la virole 3.

Le système d'insertion 1 comprend par ailleurs un premier moteur 25 permettant au dispositif d'insertion 5 d'effectuer dans son ensemble un mouvement de translation par rapport à la structure porteuse 4. Le système d'insertion 1 comprend également un deuxième moteur 26 permettant d'actionner un système d'engrenages 27 permettant de déplacer le dispositif d'insertion 5 dans son ensemble de sorte à effectuer une rotation de manière relative à la structure porteuse 4. Cette rotation permet de faire passer le dispositif d'insertion 5 d'une position verticale à une position horizontale, de manière à pouvoir agencer le tronçon de garnissage 2 en regard de l'entrée de la virole 3 tel que mentionné précédemment.

Sur la figure 2, les dispositifs télescopiques 22 sont déployés. Le dispositif d'insertion 5 comprend six montants périphériques 10 dont trois d'entre eux sont pourvus de dispositifs télescopiques 22. La répartition des dispositifs télescopiques 22 est effectuée de manière régulière autour de l'axe principal 11.

Le système d'insertion 1 est structuré de sorte à ce que les dispositifs télescopiques 22 puissent se déployer selon la direction horizontale, et ce afin d'opérer l'étape d'insertion au sein de la virole 3 agencée à l'horizontale. Autrement dit, les dispositifs télescopiques 22 sont aptes à se déployer de manière parallèle à l'axe principal 11 et à un axe d'allongement des montants périphériques 10.

Lorsque le dispositif d'insertion 5 est disposé à proximité de la virole 3 dans le but d'y insérer par la suite un tronçon de garnissage 2, les moyens de fixation 39 sont mis en oeuvre afin que les crochets 28, alors en position escamotée tel qu'illustré sur la figure 1, soient déployés. Dans leur position déployée, les crochets 28 permettent de fixer le système d'insertion 1 à la virole 3, par exemple en venant en prise sur une collerette 29 s'étendant de manière circonférentielle autour de la virole 3 au niveau de l'extrémité de la virole 3 par laquelle les tronçons de garnissage 2 sont insérés. Plus précisément, une extrémité de chaque crochet 28 forme une terminaison qui est destinée à venir en contact, dans la position déployée de ce crochet, avec une face de la collerette 29 qui est orientée à l'opposé du dispositif d'insertion 5. Une fois en position déployée, le crochet 28 au contact de la collerette 29 forme une butée axiale au déplacement relatif de la virole par rapport au dispositif d'insertion. Les crochets 28 assurent ainsi un maintien mécanique de la virole 3 en regard du dispositif d'insertion 5, y compris pendant l'insertion du tronçon de garnissage 2 au sein de la virole 3. La présence de ces crochets 28 permet d'effectuer un contrepoids suffisant pour retenir la virole 3 malgré les forces exercées sur celle-ci lors de l'insertion des tronçons de garnissage 2. Le fait que le dispositif d'insertion 5 soit équipé de tels crochets 28 permet d'éviter de prévoir la présence d'un contrepoids encombrant et lourd disposé à l'arrière de la virole 3 pour bloquer celle-ci lors de l'effort de poussée pour l'insertion du tronçon de garnissage 2.

Afin que l'insertion du tronçon de garnissage 2 au sein de la virole soit effectuée de manière uniforme, avec le minimum d'à-coups, le dispositif d'insertion 5 comprend un moyen de poussée 23 fixé à l'extrémité de chaque dispositif télescopique 22, ce moyen de poussé 23 étant destiné à être en contact direct avec le tronçon de garnissage 2 au cours de l'insertion. Le moyen de poussée 23 répartit mécaniquement les forces exercées par chacun des dispositifs télescopiques 22 en appuyant sur tout le pourtour du tronçon de garnissage 2, de manière à éviter la localisation des forces uniquement au niveau de l'extrémité des dispositifs télescopiques 22. Le moyen de poussée 23 permet ainsi d'éviter d'endommager le tronçon de garnissage 2 inséré à cause d'une force de poussée localisée. Lorsque les dispositifs télescopiques 22 sont repliés, le moyen de poussée 23 est disposé au voisinage des montants périphériques 10. Dans le cas où la base 8 est configurée pour se déployer radialement et s'adapter à différents diamètres de tronçon de garnissage 2, plusieurs moyens de poussée 23 de dimensions différentes sont conçus et l'installation du moyen de poussée 23 adéquat est effectuée après la détermination de la distance radiale entre le montant principal et les montants périphériques 10.

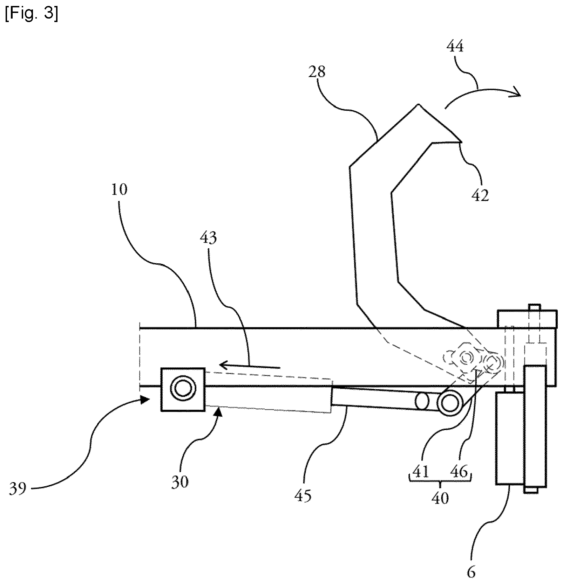

Lorsque les dispositifs télescopiques 22 se déploient pour pousser le tronçon de garnissage 2 au sein d'une virole 3 présentant une longueur importante, par exemple plusieurs dizaines de mètres, les dispositifs télescopiques 22 se déploient jusqu'à atteindre une longueur conséquente pouvant nuire à leur stabilité. Le dispositif d'insertion 5 peut donc comprendre un organe de maintien 32 relié à l'ensemble des dispositifs télescopiques 22 et agencé de sorte à être sensiblement à égale distance entre le moyen de poussée 23 et l'entrée de la virole 3. L'organe de maintien 32 a pour fonction de maintenir la position de chacun des dispositifs télescopiques 22 ainsi que la distance entre chacun d'entre eux. L'organe de maintien 32 participe donc à la répartition des forces exercées sur le tronçon de garnissage 2 inséré. L'organe de maintien 32 assure également la stabilité des dispositifs télescopiques 22, en évitant de potentielles flexions de ces derniers pouvant survenir en cas d'extension à une longueur élevée desdits dispositifs télescopiques 22. Tel que cela est illustré en figure 2, l'organe de maintien 32 présente une forme triangulaire afin de maintenir trois dispositifs télescopiques 22 équitablement répartis autour de l'axe principal 11. La forme de l'organe de maintien 32 peut toutefois varier en fonction du nombre de dispositifs télescopiques 22 inclus dans le dispositif d'insertion 5. Dans une variante non représentée, l'organe de maintien 32 peut comporter un jeu de roulettes, disposées chacune dans le prolongement des branches de l'organe de maintien, au-delà des dispositifs télescopiques, qui sont respectivement au contact de la face interne de la paroi périphérique de la virole. On vise alors à assurer un guidage continu de l'organe de maintien au sein de la virole lors du déploiement des dispositifs télescopiques et l'insertion d'un tronçon de garnissage. Ce guidage continu, par contact d'au moins une des roulettes contre la virole, permet de faciliter l'insertion malgré le poids de l'ensemble formé par les bras télescopiques et le moyen de poussée 23 qui pourrait amener l'ensemble à se désaxer. De manière alternative ou complémentaire, le moyen de poussée peut également comporter une ou plusieurs roulettes agencées en périphérie pour être au contact de la face interne de la paroi tubulaire de la virole lors de l'insertion des tronçons de garnissage au sein de la virole. La figure 3 représente en détails le moyen de fixation 39 et permet d'illustrer le fonctionnement dudit moyen de fixation 39. Ce dernier, en plus de comprendre le crochet 28 décrit précédemment, comprend également un vérin rétractable 30 et un ensemble d'entraînement 40 reliant mécaniquement le vérin rétractable 30 au crochet 28.

Le vérin rétractable 30 peut par exemple être un vérin hydraulique ou pneumatique dont le mouvement en translation entraîne celui du crochet 28, par l'intermédiaire de l'ensemble d'entraînement 40. Pour ce faire, le vérin rétractable 30 comprend une tige 45 constituant une partie mobile du vérin rétractable 30 et apte à pousser ou tirer l'ensemble d'entraînement 40.

L'ensemble d'entraînement 40 comprend une bielle 41 et une manivelle 46. La bielle 41 est entraînée par la tige 45 du vérin rétractable 30, et qui entraîne à son tour la manivelle 46. Cette dernière entraîne alors le crochet 28. La bielle 41 et la manivelle 46 permettent de convertir un mouvement linéaire 43 mis en oeuvre par le vérin rétractable 30 en un mouvement de pivotement 44 du crochet 28.

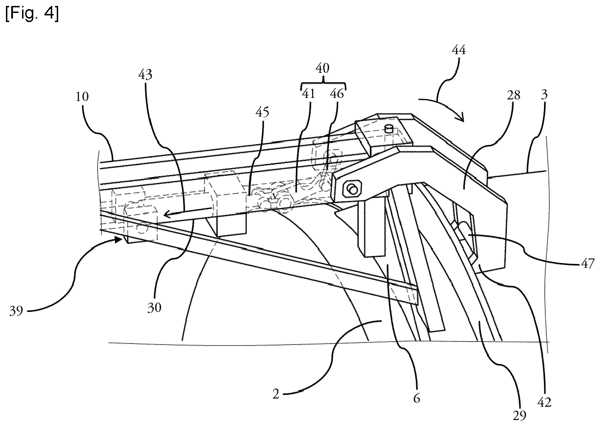

Ainsi, lorsque le vérin rétractable 30 se rétracte, l'ensemble d'entraînement 40, et donc la bielle 41 et la manivelle 46, est également entraîné et entraîne le pivotement 44 du crochet afin que celui-ci se déploie et bascule de la position escamotée à la position déployée, cette dernière étant visible sur la figure 4 qui sera décrite par la suite. Ce mouvement permet de fixer le dispositif d'insertion à la virole avant l'insertion du tronçon de garnissage dans la virole et après que le dispositif d'insertion soit correctement positionné en regard de l'entrée de la virole.

A l'inverse, lorsque le vérin rétractable 30 se déploie, celui-ci entraîne la poussée de l'ensemble d'entraînement 40, et la bielle 41 et la manivelle 46 entraînent le pivotement 44 du crochet afin que celui-ci se rétracte et bascule de la position déployée à la position escamotée. Ce mouvement est mis en oeuvre une fois le tronçon de garnissage inséré dans la virole et avant que le système d'insertion se déplace pour aller agripper un nouveau tronçon de garnissage.

Tel que cela est visible sur la figure 3, le pivotement 44 du crochet 28 se fait de manière opposée au moyen d'accroche 6 par rapport à l'axe principal 11. Ce pivotement 44 permet ainsi de ne pas buter contre les moyens d'accroche 6 lorsque le crochet 28 se déploie ou se rétracte. Chaque moyen d'accroche 6 est disposé sur l'un des montants périphériques 10 de manière à s'étendre en direction de l'axe principal 11 afin d'être en prise sur la tranche du tronçon de garnissage. Chaque crochet 28 est donc fixé sur l'un des montants périphériques 10 de manière à prendre une position escamotée en regard d'une face dudit montant périphérique 10 orientée à l'opposé de l'axe principale 11.

Tel que cela a été évoqué, le crochet 28 comprend une terminaison 42. Celle-ci présente une pointe s'étendant en saillie du corps du crochet 28 et qui est destinée à venir au contact direct de la collerette de la virole lorsque le crochet 28 est en position déployée. Dans cette position déployée, le contact entre le crochet et la collerette forme ainsi une butée axiale ponctuelle du dispositif d'insertion sur la virole, telle que la virole est bloquée axialement, dans le même sens que le sens d'insertion des tronçons dans la virole. Les crochets permettent ainsi de maintenir en position le système d'insertion relativement à la virole malgré la force de poussée importante générée par les dispositifs télescopiques lors de l'insertion des tronçons de garnissage.

La figure 4 représente également le moyen de fixation 39, mais avec cette fois-ci le crochet 28 positionné de manière à fixer le système d'insertion à la collerette 29 de la virole 3. Tel que cela a été décrit précédemment, pour prendre cette position déployée, le vérin télescopique 30 se rétracte selon le mouvement linéaire 43, et l'ensemble d'entraînement 40 est également mis en mouvement afin que la bielle 41 entraîne le crochet 28 en pivotement 44 afin que ledit crochet 28 se referme sur la virole 3 et que la terminaison 42 vienne au contact de la collerette 29. Plus particulièrement, la terminaison 42 entre en contact avec une face de la collerette 29 qui est opposée au dispositif d'insertion, de sorte que la terminaison 42 empêche la collerette et donc la virole de s'éloigner du dispositif d'insertion lors de l'effort de poussée généré pour l'insertion d'un tronçon de garnissage. D'une manière alternative à ce qui a été décrite en figure 3, chaque crochet 28 peut comprendre deux terminaisons 42 liées entre elles par une entretoise 47, afin d'augmenter le nombre de points de contact entre les crochets 28 et la collerette 29. Le système d'insertion est alors prêt à insérer le tronçon de garnissage 2 porté par le moyen d'accroche 6 au sein de la virole 3.

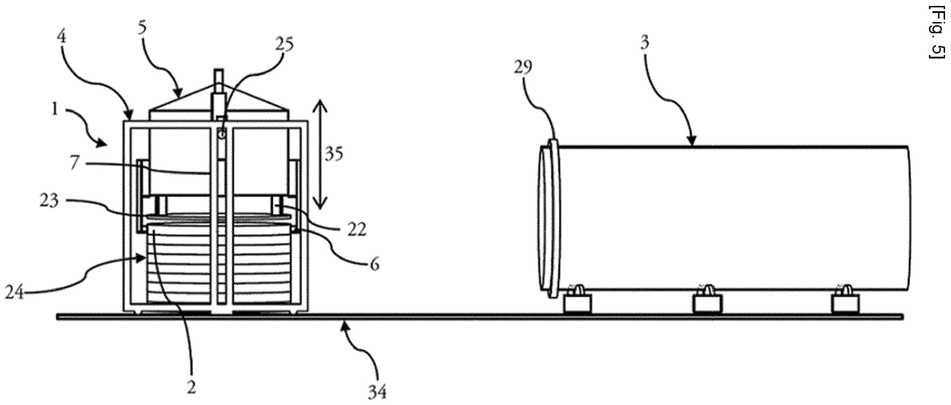

Les figures 5 à 7 illustrent schématiquement un exemple de déroulé du procédé d'insertion d'un tronçon de garnissage 2 selon l'invention.

Comme cela a été décrit précédemment, c'est le système d'insertion 1 dans son ensemble, c'est-à-dire le dispositif d'insertion 5 et la structure porteuse 4, qui permet de mettre en oeuvre le procédé d'insertion. Ainsi, la figure 5 représente notamment une étape d'agrippement d'un tronçon de garnissage 2 sur la pile 24 verticale de tronçons de garnissage 2. Pour cela, le système d'insertion 1 peut se déplacer dans son ensemble jusqu'à la pile 24 de tronçons de garnissage, par exemple à l'aide de rails 34 tel qu'évoqué précédemment.

Le dispositif d'insertion 5 est apte à effectuer dans son ensemble un mouvement de translation 35 par rapport à la structure porteuse 4, par exemple une translation le long des piliers 7 de manière verticale, c'est-à-dire de manière parallèle auxdits piliers 7. Ce mouvement de translation 35 peut être assurée par exemple par le premier moteur 25 actionné à distance. Ce mouvement de translation 35 est par exemple utilisé afin que le dispositif d'insertion 5 atteigne le sommet de la pile 24 verticale de tronçons de garnissage 2 et surplombe celui-ci, tel que cela est illustré sur la figure 5. Ceci étant fait, et une fois la structure porteuse 4 disposée autour de la pile 24 verticale de tronçons de garnissage 2, le mouvement de translation 35 permet de rapprocher le dispositif d'insertion 5 de la pile 24 de tronçons de garnissage 2 afin d'agripper le tronçon de garnissage 2 au sommet de ladite pile 24 via les moyens d'accroche 6. Une fois qu'un tronçon de garnissage 2 est agrippé, le dispositif d'insertion 5 est de nouveau déplacé de manière verticale afin de soulever le tronçon de garnissage 2 agrippé.

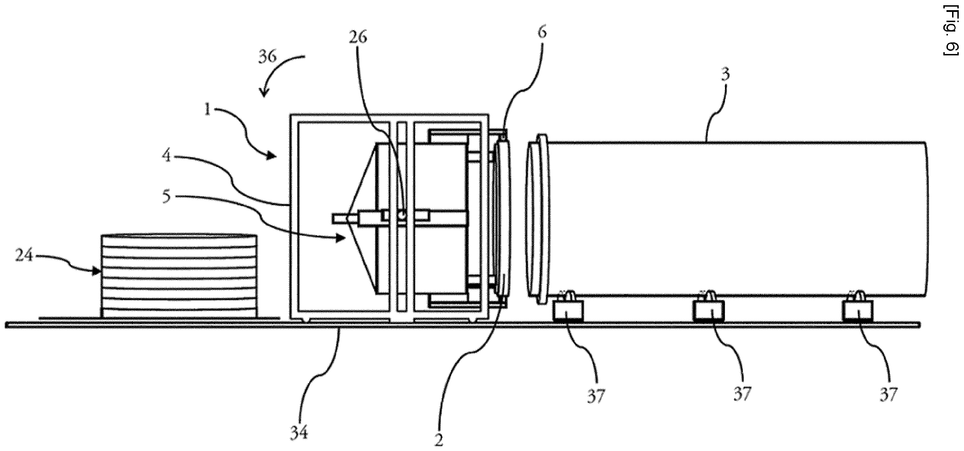

La figure 6 illustre une étape de rotation du dispositif d'insertion 5 et une étape de déplacement du système d'insertion 1 jusqu'à la virole 3. Ces deux étapes surviennent après qu'un tronçon de garnissage 2 a été agrippé par les moyens d'accroche 6. Pour assurer l'étape de rotation du dispositif d'insertion 5 par rapport à la structure porteuse 4, le dispositif d'insertion 5 comprend des moyens de mise en rotation, ici via le système d'engrenages illustré sur la figure 2, assurant au moins une rotation 36 à 90° ou sensiblement 90° du dispositif d'insertion 5 par rapport à la structure porteuse 4. Le deuxième moteur 26 peut être porté par la structure porteuse 4 et piloté de sorte que l'arbre de sortie moteur actionne le système d'engrenages et donc la rotation 36 du dispositif d'insertion 5 par rapport à la structure porteuse 4. Ce dispositif de rotation entraîné par le deuxième moteur 26 permet ainsi au dispositif d'insertion 5 de basculer entre une première position dite verticale, permettant d'agripper les tronçons de garnissage 2 sur la pile 24 de tronçons de garnissage 2 tel que cela est illustré en figure 5, et une deuxième position dite horizontale afin d'agencer le tronçon de garnissage 2 agrippé en regard de la virole 3 horizontale tel que cela est illustré sur la figure 6.

Par la suite, la structure porteuse 4 peut se déplacer tout en portant le dispositif d'insertion 5 dans le but de rapprocher le tronçon de garnissage 2 agrippé de la virole 3 afin de l'y insérer, par exemple grâce aux rails 34 tel qu'évoqué précédemment. Afin de stabiliser la virole 3, celle-ci peut être disposée sur des appuis 37.

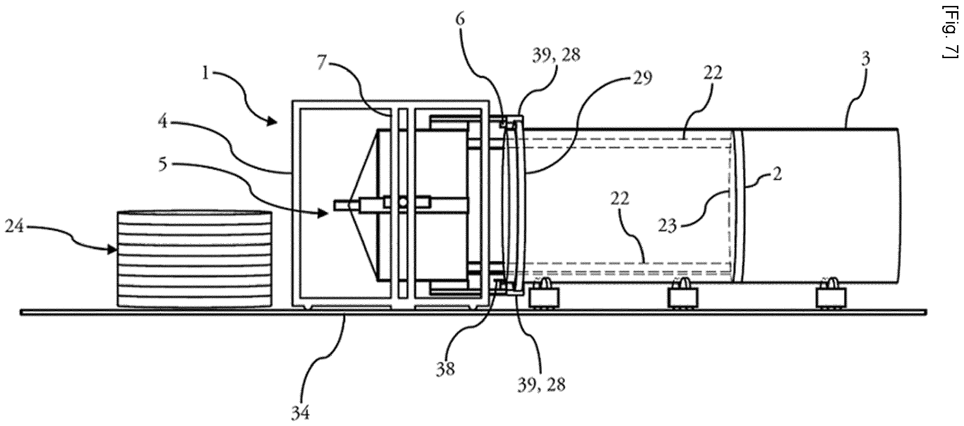

La figure 7 illustre l'étape de positionnement du dispositif d'insertion 5 à l'entrée de la virole 3 ainsi que l'étape de poussée du tronçon de garnissage 2 au sein de la virole 3.

Afin de positionner correctement le tronçon de garnissage 2 à l'entrée de la virole 3, la position verticale du dispositif d'insertion 5 peut éventuellement être ajustée grâce au mouvement de translation vertical le long des piliers 7 de la structure porteuse 4 afin que le tronçon de garnissage 2 agrippé soit parfaitement en regard de l'entrée de la virole 3. Ceci étant fait, le dispositif de fixation 39 est mis en oeuvre tel que cela est illustré sur les figures 3 et 4 afin que les crochets 28 viennent se refermer sur la collerette 29 de la virole 3 et puissent ainsi maintenir le système d'insertion 1 et plus particulièrement le dispositif d'insertion 5 en regard de l'entrée de la virole 3.

L'étape de poussée débute après que les moyens d'accroche 6 lâchent le tronçon de garnissage 2. Après le relâchement du tronçon de garnissage 2 par les moyens d'accroche 6 et avant que les dispositifs télescopiques 22 ne soient déployés pour insérer le tronçon de garnissage 2, ce dernier peut par exemple reposer sur un support de maintien 38 afin que le tronçon de garnissage 2 reste positionné correctement en regard de l'entrée de la virole. Les dispositifs télescopiques 22 se déploient alors afin que le moyen de poussée 23 insère le tronçon de garnissage 2 au sein de la virole 3, tel que ce qui a été décrit précédemment. Une fois l'insertion du tronçon de garnissage 2 effectuée, les dispositifs télescopiques 22 peuvent se rétracter, et le système d'insertion 1 peut de nouveau se déplacer pour récupérer le tronçon de garnissage 2 suivant. Le procédé d'insertion recommence alors à partir de l'étape d'agrippement décrite en figure 5.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un dispositif d'insertion d'un tronçon de garnissage dans une virole horizontale comprenant des moyens de fixation permettant de maintenir ledit dispositif d'insertion contre ladite virole. Des variantes non décrites ici pourraient être mises en oeuvre sans sortir du contexte de l'invention, dès lors que, conformément à l'invention, elles comprennent un dispositif d'insertion conforme à l'invention.

## Revendications

1. Dispositif d'insertion (5) d'au moins un tronçon de garnissage (2) pour une colonne de séparation gaz/liquide au sein d'une virole (3) cylindrique, comprenant une base (8) pourvue de moyens d'accroche (6) configurés pour agripper un tronçon de garnissage (2) et disposés régulièrement autour d'un axe principal (11), **caractérisé en ce que** le dispositif d'insertion (5) comprend au moins deux moyens de fixation (39) solidaires de la base (8), lesdits moyens de fixation (39) étant configurés pour fixer le dispositif d'insertion (5) à la virole (3).

2. Dispositif d'insertion (5) selon la revendication 1, dans lequel les moyens de fixation (39) sont agencés de manière régulière autour de l'axe principal (11).

3. Dispositif d'insertion (5) selon la revendication 1 ou 2, dans lequel au moins un moyen de fixation (39) et un moyen d'accroche (6) sont agencés sur un même montant périphérique (10) de la base (8).

4. Dispositif d'insertion (5) selon l'une quelconque des revendications précédentes, dans lequel les moyens de fixation (39) comprennent chacun un vérin rétractable (30), un crochet (28), et un ensemble d'entraînement (40) reliant mécaniquement le vérin rétractable (30) au crochet (28).

5. Dispositif d'insertion (5) selon la revendication précédente, dans lequel l'ensemble d'entraînement (40) comprend au moins une bielle (41) et une manivelle (46) configurées pour entraîner un pivotement (44) du crochet (28) en fonction d'un mouvement linéaire (43) du vérin rétractable (30).

6. Dispositif d'insertion (5) selon la revendication 4 ou 5, dans lequel les crochets (28) sont aptes à pivoter entre une position escamotée et une position déployée.

7. Dispositif d'insertion (5) selon la revendication précédente, dans lequel les crochets (28) en position escamotée sont en retrait des moyens d'accroches (6) par rapport à l'axe principal (11).

8. Dispositif d'insertion (5) selon la revendication 6 ou 7, combiné avec la revendication 3, dans lequel le pivotement (44) des crochets (28) se fait au niveau d'une face du montant périphérique (10) opposée aux moyens d'accroche (6).

9. Système d'insertion (1) d'au moins un tronçon de garnissage (2) pour une colonne de séparation gaz/liquide au sein d'une virole (3) cylindrique, comprenant une structure porteuse (4) et un dispositif d'insertion (5) selon l'une quelconque des revendications précédentes, le dispositif d'insertion (5) étant porté par la structure porteuse (4) de sorte à ce que les moyens de fixation (39) soient aptes à fixer le dispositif d'insertion (5) à la virole (3).

10. Système d'insertion (1) selon la revendication précédente, dans lequel le dispositif d'insertion (5) est apte à effectuer dans son ensemble un mouvement de translation (35) de manière relative à la structure porteuse (4).

11. Système d'insertion (1) selon la revendication 9 ou 10, dans lequel le dispositif d'insertion (5) est apte à effectuer dans son ensemble une rotation (36) de manière relative à la structure porteuse (4).

12. Procédé d'insertion d'au moins un tronçon de garnissage (2) pour une colonne de séparation gaz/liquide au sein d'une virole (3) cylindrique mis en oeuvre par un système d'insertion (1) selon la revendication précédente, comprenant :
• une étape d'agrippement d'un tronçon de garnissage (2) par les moyens d'accroche (6) du dispositif d'insertion (5),
• une étape de rotation (36) dans son ensemble du dispositif d'insertion (5) par rapport à la structure porteuse (4),
• une étape de déplacement du système d'insertion (1) jusqu'à la virole (3) grâce à la structure porteuse (4),
• une étape de positionnement du tronçon de garnissage (2) au niveau d'une entrée de la virole (3),
• une étape de fixation du dispositif d'insertion (5) à la virole (3) à l'aide des moyens de fixation (39),
• une étape de poussée du tronçon de garnissage (2) au sein de la virole (3).
